# EUROPEAN PATENT APPLICATION

(11) **EP 3 089 166 A1**
(43) Date of publication of application: **02.11.2016**
(21) Application number: 14875527.5
(22) Date of filing: 12.06.2014
(51) Int. Cl.: G21B 1/05, G21B 3/00, F22B 1/00

(54) **NUCLEAR FUSION FURNACE**

(30) Priority: 23.12.2013 CN 201310717917
(71) Applicant: Jackal Growl Publishing Co. Limited, Tsuen Wan N. T., Hong Kong (CN)
(72) Inventor: LIANG, Xiqiu, Tsuen Wan N. T. Hong Kong (CN)
(74) Representative: Becker Kurig Straus
(86) International application number: PCT/CN2014/079697
(87) International publication number: WO 2015/096405

(57) **Abstract**

A nuclear fusion furnace, which includes a magnetically conductive spherical shell (1), a solid iron ball (2), an annular ferromagnetic guide rail (3), a transit car (4), an ignition apparatus (5), and a gas delivery apparatus (6) used for outputting a mixed gas of deuterium and tritium, where a plurality of the annular ferromagnetic guide rails (3) is symmetrically fixed on an outer wall of the spherical shell (1); a water pipe (7) is provided inside a wall body of the spherical shell (1), one end of the water pipe (7) is connected to a water pump (8), another end of the water pipe (7) is connected to an air extraction apparatus (9); the transit car (4) rotates along a circumferential direction of the annular ferromagnetic guide rail (3) under the effect of a propelling force of the annular ferromagnetic guide rail (3), and a mutual magnetic levitation effect between the transit car (4) and the annular ferromagnetic guide rail (3) generates magnetic field lines; the solid iron ball (2) is placed inside the spherical shell (1), the solid iron ball (2) levitates at the center of the spherical shell (1) under a magnetic induction effect of the magnetic field lines and rotates along a rotational direction of the transit car (4), and a closed magnetic confinement space is formed between the solid iron ball (2) and the spherical shell (1). The nuclear fusion furnace effectively controls, by using a magnetic confinement effect, a nuclear fusion reaction of a mixed gas of deuterium and tritium inside a spherical shell (1), and convert energy released from nuclear fusion into water vapor output.

## Description

### Technical Field

The present invention relates to a nuclear fusion apparatus, and more particularly to a nuclear fusion furnace.

### Background

In nuclear fusion, a huge amount of energy is released when light nuclei (for example, deuterium and tritium) are combined into a relatively heavy nucleus (for example, helium). Nuclear fusion refers to a nuclear reaction form, in which a mutual nucleus aggregation effect occurs between atoms with lower masses (mainly deuterium or tritium) under certain conditions such as super high temperature and high pressure, and a new nucleus with a higher mass is generated along with release of a huge amount of energy. However, currently, nuclear fusion is generally difficult to control, and therefore it is difficult to effectively utilize energy released from nuclear fusion.

### Summary

A technical problem to be solved by the present invention is to provide a nuclear fusion furnace to effectively control, by using a magnetic confinement effect, a nuclear fusion reaction of mixed gas of deuterium and tritium inside a spherical shell, and convert energy released from nuclear fusion into water vapor output.

To solve the foregoing technical problem, a technical solution adopted by the present invention is as follows:
A nuclear fusion furnace including a magnetically conductive spherical shell, a solid iron ball, an annular ferromagnetic guide rail, a transit car, an ignition apparatus, and a gas delivery apparatus used for outputting a mixed gas of deuterium and tritium, where a plurality of the annular ferromagnetic guide rails is symmetrically fixed on an outer wall of the spherical shell; the transit car is located above the annular ferromagnetic guide rail, and cooperates with the annular ferromagnetic guide rail to generate a magnetic levitation force and a propelling force; a water pipe is provided inside a wall body of the spherical shell, one end of the water pipe is connected to a water pump, another end of the water pipe is connected to an air extraction apparatus; the ignition apparatus and the gas delivery apparatus are both fixed on the outer wall of the spherical shell, an ignition end of the ignition apparatus extends inside the spherical shell, and an output end of the gas delivery apparatus also extends inside the spherical shell;
the transit car rotates along a circumferential direction of the annular ferromagnetic guide rail under the effect of a propelling force of the annular ferromagnetic guide rail, and a mutual magnetic levitation effect between the transit car and the annular ferromagnetic guide rail generates magnetic field lines, a density of the magnetic field lines is directly proportional to a rotational speed of the transit car; the solid iron ball is placed inside the spherical shell, the magnetic field lines pass into the solid iron ball under a magnetic induction effect to enable the solid iron ball to be levitated at the center of the spherical shell and to rotate along a rotational direction of the transit car, and a closed magnetic confinement space is formed between the solid iron ball and the spherical shell;
the ignition apparatus ignites the mixed gas of deuterium and tritium inside the spherical shell by using the ignition end, the mixed gas of deuterium and tritium is heated to a plasma, and a nuclear fusion reaction occurs inside the magnetic confinement space to release energy, the released energy: in one aspect, maintains the solid iron ball in a narrow magnetic confinement space and heats the solid iron ball to reach cyclic conversion between a gaseous state and a solid state, and the solid iron ball is used for absorbing excessive energy to keep a dynamic balance of energy inside the spherical shell; in one aspect, heats the mixed gas of deuterium and tritium that is continuously introduced inside the magnetic confinement space to a plasma and a nuclear fusion reaction occurs, so as to keep a chain nuclear fusion reaction of the mixed gas of deuterium and tritium; and in one aspect, further heats water inside the water pipe into water vapor, and the water vapor is discharged by using the air extraction apparatus.

In a further embodiment, the transit car has an arc shape, and a perimeter of the transit car is smaller than that of the annular ferromagnetic guide rail.

In a further embodiment, a plurality of the transit cars is independent from each other, and is distributed at an interval around the circumferential direction of the annular ferromagnetic guide rail.

In a further embodiment, the water pipe is coiled to form a coil pipe inside the wall body of the spherical shell.

In a further embodiment, the ignition apparatus is a laser heating apparatus or a Shenguang heating apparatus.

In a further embodiment, the nuclear fusion furnace furth er comprises a vacuum extraction apparatus, and the vacuum extraction apparatus is fixed on the outer wall of the spherical shell and has an extraction end extending inside the spherical shell.

In a further embodiment, the spherical shell is fixed on a support.

Compared with the existing technology, beneficial effects of the present invention are as follows:
In the present invention, magnetic levitation cooperation between a transit car and an annular ferromagnetic guide rail enables the generation of magnetic field lines between the transit car and the annular ferromagnetic guide rail, which change along a rotational direction of the transit car. Under the effect of the magnetic field lines, a solid iron ball is levitated and rotates. The iron ball synchronises with the transit car and is rotatable in a same direction at a speed which is a multiple of an external rotational speed. During the rotation, the iron ball directly forms a narrow channel with a space inside a spherical shell and closes to form a controllable magnetic confinement space. When a mixed gas of deuterium and tritium introduced inside the magnetic confinement space is ignited by an ignition apparatus to a temperature of a nuclear fusion condition, a nuclear fusion reaction occurs. The nuclear fusion reaction is confined inside the magnetic confinement space to operate in a surge electrical magnetism in a direct-state flow direction, so that effective control is achieved through speed manipulation of the transit car. Moreover, the released energy is dynamically absorbed by the solid iron ball in a process of conversion between a gaseous state and a solid state. Furthermore, controlling the electromagnetic intensity through a speed of the transmit car ensures that the temperature inside the spherical shell is not excessively high, and further allows the nuclear fusion reaction to be controlled effectively. In one aspect, the energy is further used as a capability of heating the mixed gas of deuterium and tritium that continues to enter the magnetic confinement space, so as to form a chain nuclear fusion reaction. In another aspect, the energy heats water in a water pipe and formed water vapor is appropriately discharged to achieve effective utilization, for example, for driving a turbine-driven electricity generator to generate electricity.

The present invention is further described below in detail with reference to the accompanying drawings and specific implementation manners.

### Brief Description of The Drawings

FIG. 1 is a schematic structural perspective view of a nuclear fusion furnace according to the present invention (a gas delivery apparatus, a water pump, and an air extraction apparatus are omitted); and
FIG. 2 is a schematic structural sectional view of a nuclear fusion furnace according to the present invention.

In the Figures: 1, spherical shell; 2, solid iron ball; 3, annular ferromagnetic guide rail; 4, transit car; 5, ignition apparatus; 6, gas delivery apparatus; 7, water pipe; 8, water pump; 9, air extraction apparatus; 10, magnetic confinement space; 11, support.

### Detailed Description

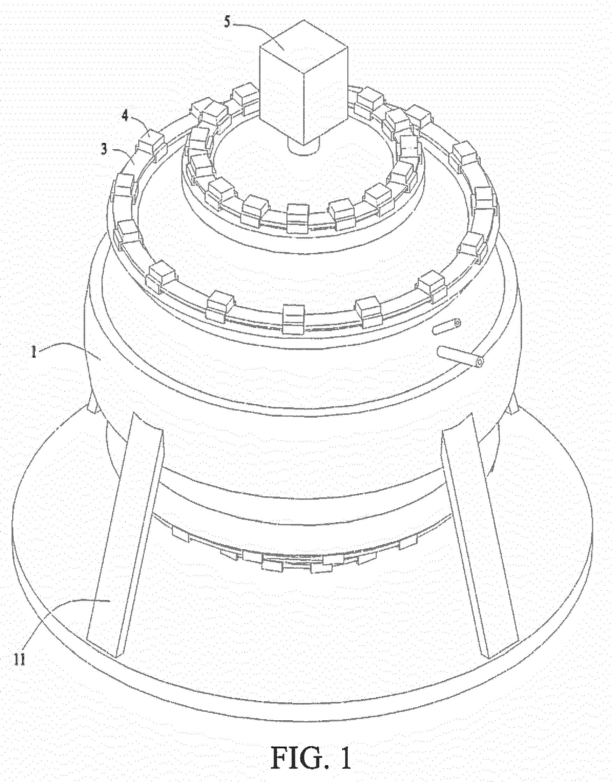

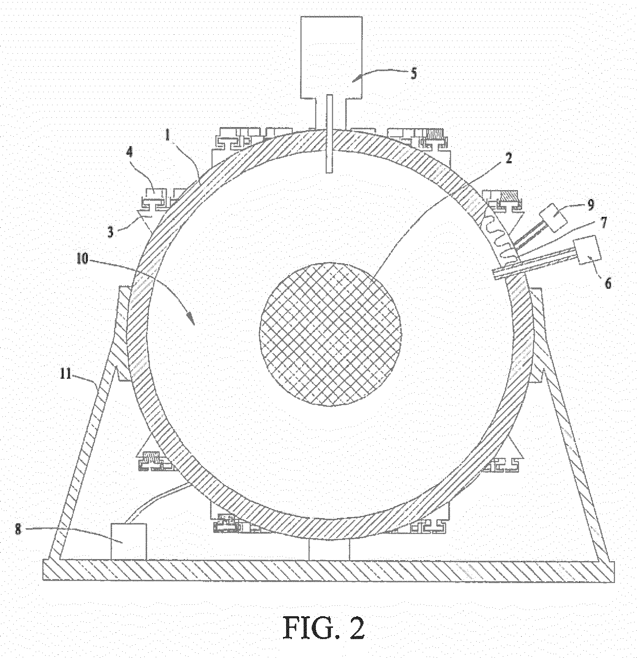

As shown in FIG. 1 and FIG. 2, a nuclear fusion furnace includes a magnetically conductive spherical shell 1, a solid iron ball 2, an annular ferromagnetic guide rail 3, a transit car 4, an ignition apparatus 5, and a gas delivery apparatus 6 for outputting mixed gas of deuterium and tritium. A plurality of the annular ferromagnetic guide rails 3 is symmetrically fixed on an outer wall of the spherical shell 1. The transit car 4 is located above the annular ferromagnetic guide rail 3, and cooperates with the annular ferromagnetic guide rail 3 to generate a magnetic levitation force and a propelling force. A water pipe 7 is provided inside a wall body of the spherical shell I, one end of the water pipe 7 is connected to a water pump 8, and another end of the water pipe 7 is connected to an air extraction apparatus 9. The ignition apparatus 5 and the gas delivery apparatus 6 are both fixed on the outer wall of the spherical shell 1, an ignition end of the ignition apparatus 5 extends inside the spherical shell 1, and an output end of the gas delivery apparatus 6 also extends inside the spherical shell 1.

The transit car 4 rotates along a circumferential direction of the annular ferromagnetic guide rail 3 under the effect of a propelling force of the annular ferromagnetic guide rail 3, and a mutual magnetic levitation effect between the transit car 4 and the annular ferromagnetic guide rail 3 generates magnetic field lines, and the density of the magnetic field lines is directly proportional to a rotational speed of the transit car 4. The solid iron ball 2 is placed inside the spherical shell 1, the magnetic field lines pass through the solid iron ball 2 under a magnetic induction effect to enable the solid iron ball 2 to be levitated at the center of the spherical shell 1 and to rotate along a rotational direction of the transit car 4, and a closed magnetic confinement space 10 is formed between the solid iron ball 2 and the spherical shell 1.

The ignition apparatus 5 ignites mixed gas of deuterium and tritium inside the spherical shell 1 by using the ignition end, the mixed gas of deuterium and tritium is heated to a plasma, and a nuclear fusion reaction occurs inside the magnetic confinement space 10 to release energy. The released energy, in one aspect, maintains the solid iron ball 2 in a narrow magnetic confinement space and heats the solid iron ball to reach a cyclic conversion between a gaseous state and a solid state, and the solid iron ball 2 is used for absorbing excessive energy to keep a dynamic balance of energy inside the spherical shell 1. In one aspect, the released energy heats the mixed gas of deuterium and tritium that is continuously introduced inside the magnetic confinement space 10 to a plasma such that a nuclear fusion reaction occurs, so as to maintain a chain nuclear fusion reaction of the mixed gas of deuterium and tritium. In one aspect, the released energy further heats the water inside the water pipe 7 into water vapor which is discharged by using the air extraction apparatus 9.

Magnetic levitation cooperation between the transit car 4 and the annular ferromagnetic guide rail 3 enables generation of magnetic field lines between the transit car 4 and the annular ferromagnetic guide rail 3, which change along the rotational direction of the transit car 4. Unde r the effect of the magnetic field lines, the solid iron ball 2 is levitated, the solid iron ball 2 and the transit car 4 rotate in the same direction, and the solid iron ball 2 can shield the magnetic field lines. That is, under the effect of the shape and solid structure of the solid iron ball 2, when the magnetic field lines pass through the solid iron ball 2, the magnetic field lines lift the solid iron ball 2 and actuate the solid iron ball 2 to rotate. A direct proportional relationship of 1:3 is set between the density of the magnetic field lines and the rotational speed of the transit car 4, where the magnetic field lines are generated under the common effect of the solid iron ball 2, the transit car 4, and the annular ferromagnetic guide rail 3, so as to form the magnetic confinement space 10 with the closed spherical shell 1. When the transit car 4 rotates above the spherical shell 1, strong magnetism generated by the transit car 4 forcefully enters the solid iron ball 2. When the rotational speed of the transit car 4 is higher, the generated electromagnetic field is stronger, so that the intensity of the electromagnetic field inside the cavity of the spherical shell 1 can be controlled. In other words, the intensity of electromagnetic field can be manipulated with the speed, which is more superior than a conventional Tokamak confined electromagnetic flow. Moreover, conventional Tokamak confined electromagnetic flow cannot generate electricity and only consumes electricity, so that in an existing nuclear fusion process, consumed electricity is more than generated electricity.

When the mixed gas of deuterium and tritium that is introduced inside the magnetic confinement space 10 is ignited by the ignition apparatus 5 to a temperature of a nuclear fusion condition, a nuclear fusion reaction occurs, and the nuclear fusion reaction is confined inside the magnetic confinement space 10 and energy is effectively confined and limited. The released energy, in one aspect, is dynamically absorbed by the solid iron ball 2 in a process of conversion between a gaseous state and a solid state, so as to ensure that the temperature inside the spherical shell 1 is not excessively high, and further allows the nuclear fusion reaction to be controlled effectively. When energy inside the spherical shell 1 is in excess, the solid iron ball 2 absorbs the energy and is gasified, the gasified solid iron ball 2 is still limited outside the magnetic confinement space 10 so as to keep the spherical structure thereof. When the energy is insufficient to gasify the solid iron ball 2, the gasified solid iron ball 2 solidifies to form a solid state and releases energy, maintaining dynamic feedback and return of energy and allowing the energy that shall be released to reach a continuous balance. Moreover, because the element iron has the highest binding energy, a nuclear fusion reaction can hardly occur to the solid iron ball 2 at high temperature, and the solid iron ball 2 can reach cyclic conversion between a gaseous state and a solid state.

In one aspect, the energy released from nuclear fusion of the mixed gas of deuterium and tritium is further used as a capability of heating the mixed gas of deuterium and tritium that continues to enter the magnetic confinement space 10, forming a chain nuclear fusion reaction, so as to maintain the high temperature required for nuclear fusion without the need of continuous ignition by using the ignition apparatus 5.

In another aspect, the energy released from nuclear fusion of the mixed gas of deuterium and tritium further heats the water in the water pipe 7, forming high temperature water vapor, which is extracted by the air extraction apparatus 9 for effective utilization, for example, driving a turbine-driven electricity generator to generate electricity.

According to the needs for the magnetic field intensity of the magnetic confinement space 10 during a nuclear fusion reaction, the rotational speed and rotational direction of the transit car 4 may be controlled, and each of the transit cars 4 may have different speeds and rotational directions. The transit car 4 may be set to an arc shape, and the perimeter of the transit car 4 is smaller than that of the annular ferromagnetic guide rail 3. That is, one arc-shaped transit car 4 is arranged for each annular ferromagnetic guide rail 3. A plurality of the transit cars 4 independent from each other as shown in FIG. 1 and FIG. 2 of this embodiment may also be set, and is distributed at an interval around the circumferential direction of the annular ferromagnetic guide rail 3. That is, a plurality of the transit cars 4 is arranged for each annular ferromagnetic guide rail 3.

The nuclear fusion furnace in this embodiment further includes a vacuum extraction apparatus (not shown in the drawings). The vacuum extraction apparatus is fixed on the outer wall of the spherical shell, and has an extraction end extending inside the spherical shell. A pressure relieving/reducing apparatus may correspondingly be arranged both on and under the spherical shell 1, which discharges gas, water, and other residual compounds at suitable pressure.

In this embodiment, four annular ferromagnetic guide rails 3 are distributed at an equal interval along a vertical direction of the spherical shell 1. To ensure stability of the spherical shell 1, the spherical shell, 1 is fixed on a support 11.

To ensure that the water pipe 7 is thoroughly and uniformly heated, the water pipe 7 is coiled to form a coil pipe inside the wall body of the spherical shell 1. The high temperature energy generated from nuclear fusion may be cooled down by the wall body of the spherical shell 1 before transferring heat to the water pipe 7. The coil pipe form of the water pipe 7 increases a contact area with high temperature energy.

To reach the high temperature needed for a nuclear fusion reaction, the ignition apparatus 5 may be a laser heating apparatus, or may also be a Shenguang heating apparatus. The maximum laser output power of a currently existing laser heating apparatus reaches one hundred trillion watts and is sufficient to "ignite" nuclear fusion. That is, high temperature of about one hundred thousand degrees Celsius is needed. In addition to a laser heating manner, a heating method using ultra high frequency microwaves may also be used to reach the "ignition" temperature.

It may be understood that a small portion of energy generated from nuclear fusion remains inside the magnetic confinement space 10 to keep a chain reaction, and the remaining large portion of energy is used for heating the water in the water pipe 7 to generate water vapor used for driving a turbine to generate electricity.

The foregoing implementation manner is only a preferred implementation manner of the present invention and cannot be used to define the protection scope of the present invention. An y nonessential change and replacement made by a person skilled in the art on the basis of the present invention shall fall within the protection scope that the present invention.

## Claims

1. A nuclear fusion furnace, **characterized in that**:
the nuclear fusion furnace comprises a magnetically conductive spherical shell, a solid iron ball, an annular ferromagnetic guide rail, a transit car, an ignition apparatus, and a gas delivery apparatus used for outputting a mixed gas of deuterium and tritium, wherein a plurality of the annular ferromagnetic guide rails is symmetrically fixed on an outer wall of the spherical shell; the transit car is located above the annular ferromagnetic guide rail, and cooperates with the annular ferromagnetic guide rail to generate a magnetic levitation force and a propelling force; a water pipe is provided inside a wall body of the spherical shell, one end of the water pipe is connected to a water pump, another end of the water pipe is connected to an air extraction apparatus; the ignition apparatus and the gas delivery apparatus are both fixed on the outer wall of the spherical shell, an ignition end of the ignition apparatus extends inside the spherical shell, and an output end of the gas delivery apparatus also extends inside the spherical shell;
the transit car rotates along a circumferential direction of the annular ferromagnetic guide rail under the effect of a propelling force of the annular ferromagnetic guide rail, and a mutual magnetic levitation effect between the transit car and the annular ferromagnetic guide rail generates magnetic field lines, a density of the magnetic field lines is directly proportional to a rotational speed of the transit car; the solid iron ball is placed inside the spherical shell, the magnetic field lines pass into the solid iron ball under a magnetic induction effect to enable the solid iron ball to be levitated at the center of the spherical shell and to rotate along a rotational direction of the magnetic field lines of the transit car, and a closed magnetic confinement space is formed between the solid iron ball and the spherical shell;
the ignition apparatus ignites the mixed gas of deuterium and tritium inside the spherical shell by using the ignition end, the mixed gas of deuterium and tritium is heated to a plasma, and a nuclear fusion reaction occurs inside the magnetic confinement space to release energy, the released energy, in one aspect, maintains the solid iron ball in a narrow magnetic confinement space and heats the solid iron ball to reach cyclic conversion between a gaseous state and a solid state, and the solid iron ball is used for absorbing excessive energy to keep a dynamic balance of energy inside the spherical shell; the released energy, in one aspect, heats the mixed gas of deuterium and tritium that is continuously introduced inside the magnetic confinement space to a plasma and a nuclear fusion reaction occurs, so as to keep a chain nuclear fusion reaction of the mixed gas of deuterium and tritium; and the released energy, in one aspect, further heats water inside the water pipe into water vapor, and the water vapor is discharged by using the air extraction apparatus.

2. The nuclear fusion furnace according to claim 1, **characterized in that**: the transit car has an arc shape, and a perimeter of the transit car is smaller than that of the annular ferromagnetic guide rail.

3. The nuclear fusion furnace according to claim 1, **characterized in that**: a plurality of the transit cars is independent from each other, and is distributed at an interval around the circumferential direction of the annular ferromagnetic guide rail.

4. The nuclear fusion furnace according to claim 1, **characterized in that**: the water pipe is coiled to form a coil pipe inside the wall body of the spherical shell.

5. The nuclear fusion furnace according to claim 1, **characterized in that**: the ignition apparatus is a laser heating apparatus or a Shenguang heating apparatus.

6. The nuclear fusion furnace according to any one of claims 1 to 5, **characterized in that**: the nuclear fusion furnace further comprises a vacuum extraction apparatus, and the vacuum extraction apparatus is fixed on the outer wall of the spherical shell and has an extraction end extending inside the spherical shell.

7. The nuclear fusion furnace according to any one of claims 1 to 5, **characterized in that**: the spherical shell is fixed on a support.
